# EUROPEAN PATENT APPLICATION

(11) **EP 3 037 208 A1**
(43) Date of publication of application: **29.06.2016**
(21) Application number: 14200324.3
(22) Date of filing: 24.12.2014
(51) Int. Cl.: B23P 11/00, F16B 4/00, F16D 1/072, F16D 3/38

(54) **Assembly method of intermediate shaft for steering device of vehicle**

(71) Applicant: Kowoo Co., Ltd., Osan-city, Gyeonggi-do 447-160 (KR)
(72) Inventor: Shin, Tae Joong, Seoul (KR)
(74) Representative: Moore, Graeme Patrick

(57) **Abstract**

Provided are a method of assembling an interm shaft for a steering shaft, in which serrations respectively corresponding to an outer diameter of an interm shaft and an inner diameter of a yoke are formed so as to conveniently assemble an end of the interm shaft and a yoke portion of a universal joint, and an inner side of the upper end of a fitting portion of the interm shaft is crimped to thereby expand an outer diameter of an end of the interm shaft and to thus prevent secession from the yoke. The assembly method includes: a serration molding step (S10) of molding serrations on an inner diameter portion of a yoke (20) of a universal joint; a fitting portion forming step (S20) of forming a groove portion (101) so as to have an interior space in one end of the interm shaft (100) that is fitted to the yoke (20), in which a fitting portion (110) on which serrations are molded is formed on an outer diameter portion of the groove portion (101); a serration coupling step (S30) of performing a serration coupling by inserting the fitting portion (110) of the interm shaft (100) into the inside of the yoke (20) so as to be fitted with each other; and a fitting portion pressing step (S40) of crimping an inner side of an upper end of the fitting portion (110) of the interm shaft (100) coupled with the yoke (20), and extending the upper end of the fitting portion (110) to an outer side from the inner diameter of the yoke (20), to thereby prevent mutual secession between the yoke (20) and the interm shaft (100).

## Description

### [Technical Field]

The present invention relates to a method of assembling an intermediate shaft (abbreviated as "interm") for a steering device for a vehicle, and more particularly to an assembly method of an interm shaft for a vehicle steering device whose structure is improved, in which serrations are molded on the outer circumferential surface of the end of the interm shaft for coupling between the interm shaft and a joint and the interm shaft and a yoke are fixedly coupled through crimping, to thereby perform a serration coupling without welding.

### [Background Art]

Generally, a vehicle steering device includes: a steering wheel for generating a steering force by the rotation operation of a driver; a steering column for adjusting the angle of the steering wheel, while surrounding a steering shaft of the steering wheel; and an interm shaft that transmits the steering force of the steering wheel to a steering gear.

The interm shaft is provided between a column module in which the steering wheel and the steering column are combined to generate a rotational force and a chassis module in which a gearbox and a suspension are combined to operate wheels.

In addition, the interm shaft is provided with a structure that a solid shaft that is connected to the steering gear through a universal joint, and a hollow tubular shaft (hereinafter referred to as a "hollow shaft") that is connected to the steering shaft of the steering column through a universal joint, are coupled to each other so as to be movable relatively axially. Of course, the hollow shaft and the solid shaft may be installed at positions opposite to those described above. That is, the solid shaft may be coupled with the steering shaft of the steering column, and the hollow shaft may be connected to the steering gear.

The hollow shaft and the solid shaft may be coupled in a spline coupling structure so as to be movable relatively to each other axially for the rotational force transmission and shock absorption.

An example of a conventional interm shaft of a steering device is disclosed in the Korean Utility Model Registration No. 20-0296938 entitled a "coupling structure of interm shaft" registered on 22 November 2002, in which a front end portion of a tube where a yoke portion is mounted and one side of the interm shaft are coupled with serrations, a secession preventing cap to which a coupling assistance function is added is attached while surrounding a terminal formed by a coupling portion, the secession prevention cap is divided and then fabricated, and a fitting projection portion and a guide groove portion having different cross-sectional area of a distal end portion and the front end portion are mutually engaged with each other in which the fitting projection portion and the guide groove portion are formed in the lengthy direction at both front end portions.

An example of a conventional method of fabricating an interm shaft of a steering device is disclosed in the Korean Patent Application Publication No. 10-2013-0027696 entitled a "device for fabricating a spline shaft for a vehicle steering device" published on 18 March 2013. The spline shaft fabricating device includes: a machine frame; a first support unit that is mounted on the machine frame, for supporting the lower end of the spline shaft to be machined; a second supporting unit for supporting the top end of the spline shaft, and that is driven to escalate; a clamping unit that clamps the outside between the top and bottom of the spline shaft to thus prevent shaking; a movable block that is movable up and down and that supports a machining tool for machining the spline shaft; a main drive for driving the escalating movement of the movable block; a height adjustment unit for adjusting the heights of the second support unit and the movable block according to the length of the spline shaft; and a shaft mounting posture determining unit for determining a mounting posture of the spline shaft.

The interm shaft is configured to have a solid shaft or a hollow shaft, and employs a coupling method in which one end of the shaft is serration-coupled to the inside of one end of the tube, and the other end of the shaft and the other end of the tube are respectively press-fitted to the yoke of the universal joint, to then be integrally coupled by welds.

However, the coupling structure between the conventional interm shaft and the universal joint can be easily seceded by an external impact due to defective welding of the welding operation and vulnerability of the welded portions, in the course of welding to prevent secession of the upper and lower direction, after coupling the other end of the shaft and the other end of the tube with the inner diameter of the yoke, respectively, in a press-fitting manner.

### [Disclosure]

### [Technical Problem]

To solve the above problems or defects, it is an object of the present invention to provide an assembly method of an interm shaft for a vehicle steering device in which serration portions that are respectively formed in the circumference of the end of the interm shaft and the end of the universal joint are respectively molded in a secession preventive structure, and the molded serration portions are coupled and then the end of the interm shaft is caulked, to then be assembled so as to prevent secession.

### [Technical Solution]

To accomplish the above and other objects of the present invention, according to an aspect of the present invention, there is provided a method of assembling an interm shaft for a steering shaft, the assembly method comprising: a serration molding step (S10) of molding serrations on an inner diameter portion of a yoke (20) of a universal joint; a fitting portion forming step (S20) of forming a groove portion (101) so as to have an interior space in one end of the interm shaft (100) that is fitted to the yoke (20), in which a fitting portion (110) on which serrations are molded is formed on an outer diameter portion of the groove portion (101); a serration coupling step (S30) of performing a serration coupling by inserting the fitting portion (110) of the interm shaft (100) into the inside of the yoke (20) so as to be fitted with each other; and a fitting portion pressing step (S40) of crimping an inner side of an upper end of the fitting portion (110) of the interm shaft (100) coupled with the yoke (20), and extending the upper end of the fitting portion (110) to an outer side from the inner diameter of the yoke (20), to thereby prevent mutual secession between the yoke (20) and the interm shaft (100), wherein at a process of forming serrations on the fitting portion (110) of the interm shaft (100), a stepped small diameter (115) is formed so that an outer diameter portion of the fitting portion (110) becomes smaller than the outer diameter of the other portion of the fitting portion (110).

### [Advantageous Effects]

As described above, according to the present invention, an interm shaft and a yoke are completely coupled by serration coupling and caulking. Accordingly, stiffness of the coupling portion is improved in comparison with a conventional welding coupling method, left and right directions are interfered by an end coupling method of the yoke and the interm shaft that are serration-coupled with each other, to thereby prevent rotation of the yoke and the interm shaft and press the inner side of the upper end of the interm shaft, and to thereby prevent secession of the interm shaft and the yoke in the vertical direction.

### [Description of Drawings]

FIG. 1 is a flow chart sequentially illustrating a method of assembling an interm shaft for a steering device according to the present invention.
FIG. 2 is a perspective view showing a yoke to be applied to the present invention.
FIG. 3 is a perspective view of an interm shaft applied to the present invention.
FIG. 4 is a front view of FIG. 3.
FIG. 5 is a perspective view showing a state before coupling the yoke and the interm shaft according to the present invention.
FIG. 6 is a front view of FIG. 5.
FIG. 7 is a perspective view showing a state after coupling the yoke and the interm shaft according to the present invention.
FIG. 8 is a perspective view showing a state where pressing the top end of the interm shaft after coupling the yoke and the interm shaft according to the present invention.
FIG. 9 is a front view of the interm shaft that is pressed and molded according to the present invention in FIG. 8.

### [Best Mode]

The above and other objects, features, and advantages of the present invention can be appreciated by the following description and will be understood more clearly by embodiment of the present invention. In addition, it will be appreciated that the objects and advantages of the present invention will be easily realized by means shown in the appended patent claims, and combinations thereof. Accordingly, the technical spirit of the present invention can be easily implemented by one of ordinary skill in the art.

Further, if it is determined that the detailed description of the known art related to the present invention makes the gist of the present invention unnecessarily obscure, the detailed description thereof will be omitted.

According to the present invention, there is provided a method of assembling an interm shaft for a vehicle steering shaft, in which serrations respectively corresponding to an outer diameter of an interm shaft and an inner diameter of a yoke are formed so as to conveniently assemble an end of the interm shaft and a yoke portion of a universal joint, and an inner side of the upper end of a fitting portion of the interm shaft is crimped to thereby expand an outer diameter of an upper end of the interm shaft and to thus prevent secession from the yoke.

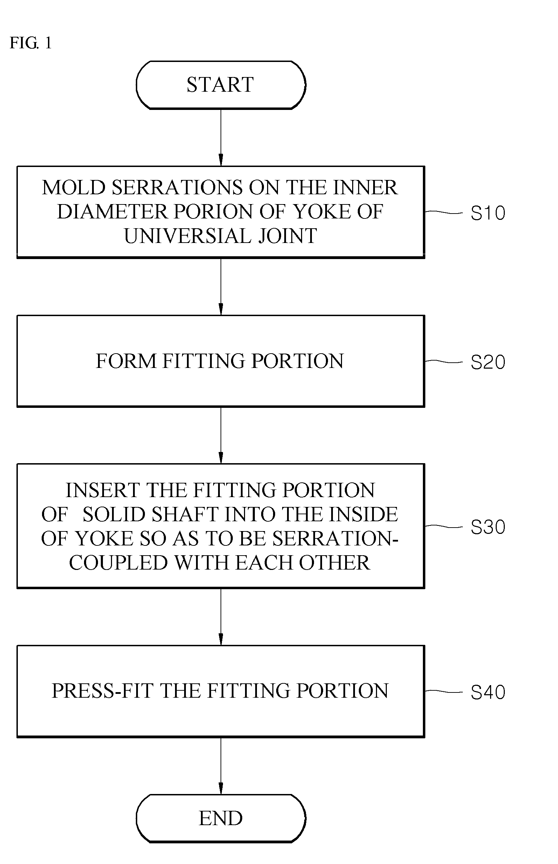

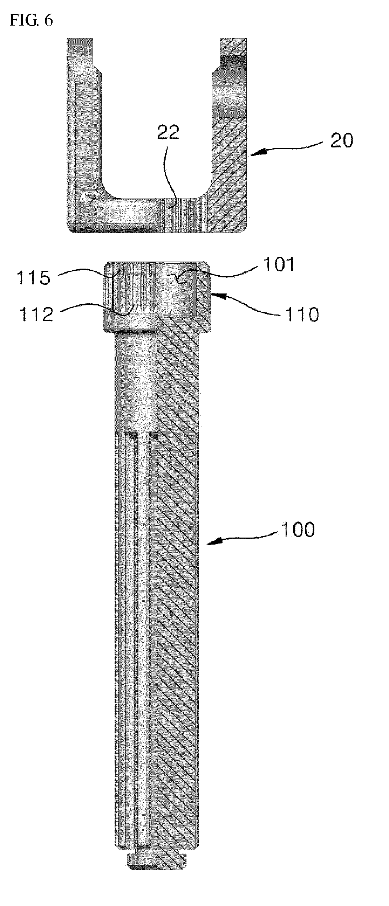

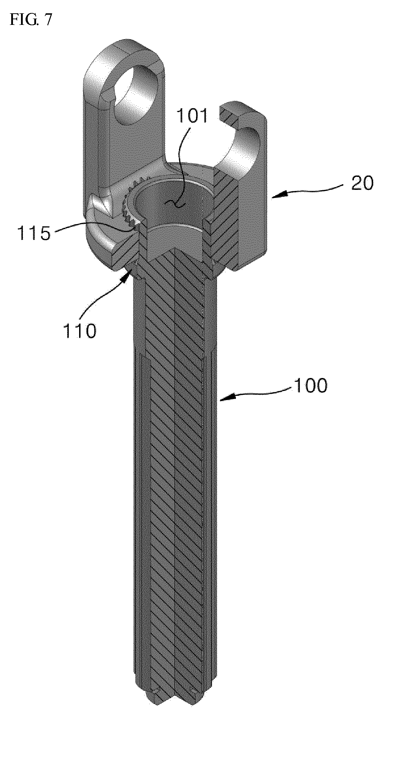

Referring to FIG. 1 to 9, a method of assembling an interm shaft for a steering shaft, the assembly method includes: a serration molding step (S10) of molding serrations on an inner diameter portion of a yoke 20 of a universal joint; a fitting portion forming step (S20) of forming a groove portion 101 so as to have an interior space in one end of the interm shaft 100 that is fitted to the yoke 20, in which a fitting portion 110 on which serrations are molded is formed on an outer diameter portion of the groove portion 101; a serration coupling step (S30) of performing a serration coupling by inserting the fitting portion 110 of the interm shaft 100 into the inside of the yoke 20 so as to be fitted with each other; and a fitting portion pressing step (S40) of crimping an inner side of an upper end of the fitting portion 110 of the interm shaft 100 coupled with the yoke 20, and extending the upper end of the fitting portion 110 to an outer side from the inner diameter of the yoke 20, to thereby prevent mutual secession between the yoke 20 and the interm shaft 100.

In addition, at the fitting portion pressing step (S40), the fitting portion 110 of the interm shaft 100 is made to penetrate the inner diameter portion of the yoke 20, and then compressive forces are transferred in all directions at the inner side of the upper end of the penetrated interm shaft 100, to thereby form the outer diameter of the upper end of the fitting portion 110 of the interm shaft 100 further outwardly from the inner diameter of the yoke 20.

Further, at a process of forming serrations on the fitting portion 110 of the interm shaft 100, a stepped small diameter 115 is formed so that an outer diameter portion of the fitting portion 110 becomes smaller than the outer diameter of the other portion of the fitting portion 110.

In addition, at the serration coupling step (S30), the small diameter 115 is penetratively protruded from the inner diameter portion of the yoke 20.

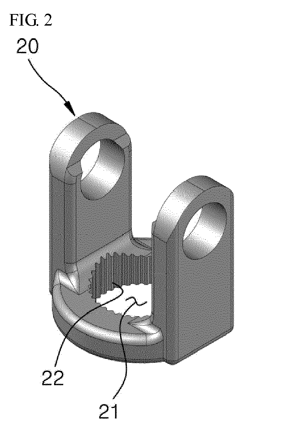

In more detail, as shown in FIG. 2, the yoke 20 is configured in a "U" character type, and a throughhole 21 that communicates up and down is formed on the bottom surface of the yoke 20. In FIG. 2, serrations 22 are formed on the inner circumferential surface of the throughhole 21.

The serrations 22 of the yoke 20 may be molded in a tooth form on the inner circumferential surface of the yoke 20 in the vertical direction by using a separate molding machine.

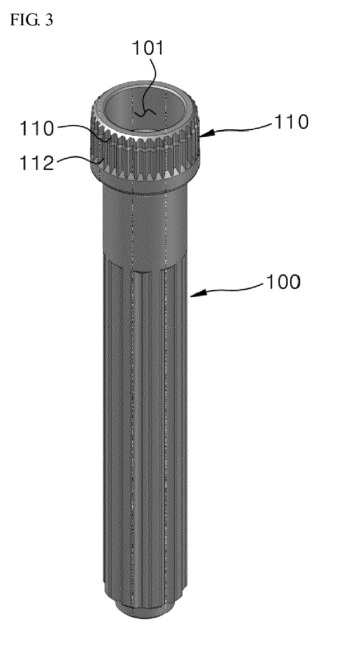

Referring to FIG. 3, the interm shaft 100 is configured to have the groove portion 101 so as to have an internal space on one end portion thereof, and to have the fitting portion 110 in which the serrations 112 are molded on the circumferential region of the outer diameter of the groove portion 101.

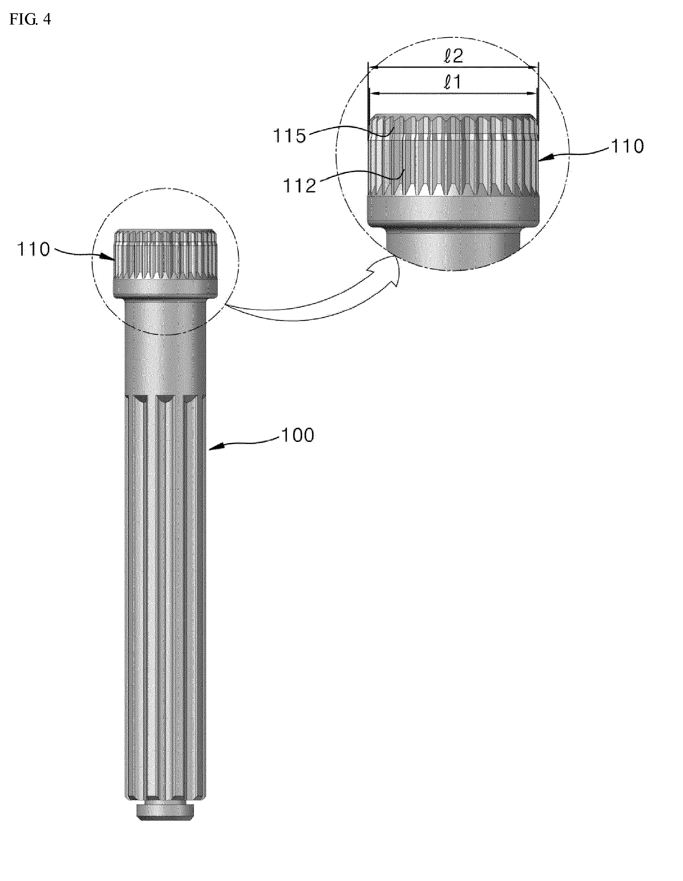

Further, as shown in FIGS. 4 to 6, the fitting portion 110 of the interm shaft 100 is preferably configured to form a stepped small diameter portion 115 in an upper end of the interm shaft 100 at a process of forming serrations 112 on the outer circumferential surface of the groove portion 101 of the interm shaft 100, in which the upper end of the interm shaft 100 is stepped with respect to the lower end thereof in view of the outer diameter thickness.

The small diameter portion 115 is formed in a stepped shape (ℓ1<ℓ2) so that the upper end of the fitting portion 110 of the interm shaft 100 has a smaller outer diameter than the lower portion that is the other portion of the fitting portion 110, and the diameter of the lower outer diameter of the fitting portion 110 of the interm shaft 100 and the inner diameter of the yoke 20 are formed in an identical magnitude, to thereby improve fitting performance by the stepped small diameter portion 115 when the fitting portion 110 is fitted into the inside of the inner diameter of the yoke 20.

The serrations 112 of the interm shaft 100 are formed in the vertical direction in a tooth form on the outer circumferential surface of the fitting portion 110.

Then, the engagement of the serrations between the interm shaft 100 and the yoke 20 is achieved in a structure where gear teeth of the serrations 22 and 112 are tooth-engaged with each other, at a process of fitting the fitting portion 110 of the interm shaft 100 into the inner diameter portion of the yoke 20.

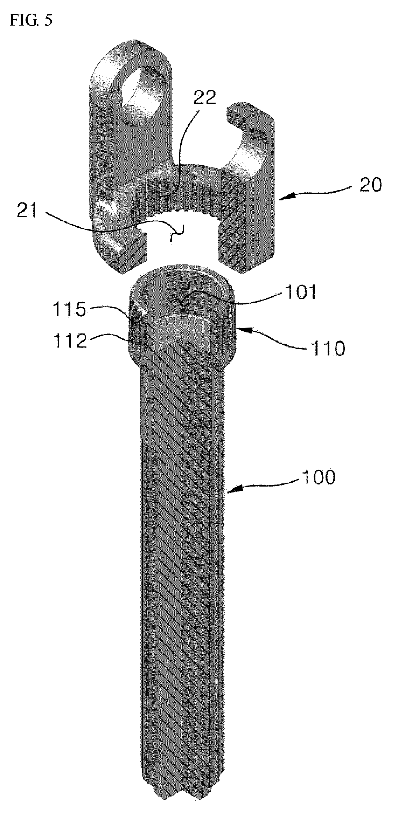

As shown in FIGS. 5 to 7, the engagement of the serrations between the interm shaft 100 and the yoke 20 is achieved by fitting the interm shaft 100 into the yoke 20 upwards from the lower side of the yoke 20 in the vertical direction, in which since the inner diameter of the small diameter portion 115 of the interm shaft 100 is formed smaller than the inner diameter of the yoke 20, the serrations 112 formed on the small diameter portion 115 of the interm shaft 100 are fitted with the serrations 22 formed on the yoke 20. Then, the engagement of the serrations between the interm shaft 100 and the yoke 20 has a coupling structure that the outer diameter of the fitting portion 110 of the interm shaft 100 is press-fitted into the inner diameter of the yoke 20.

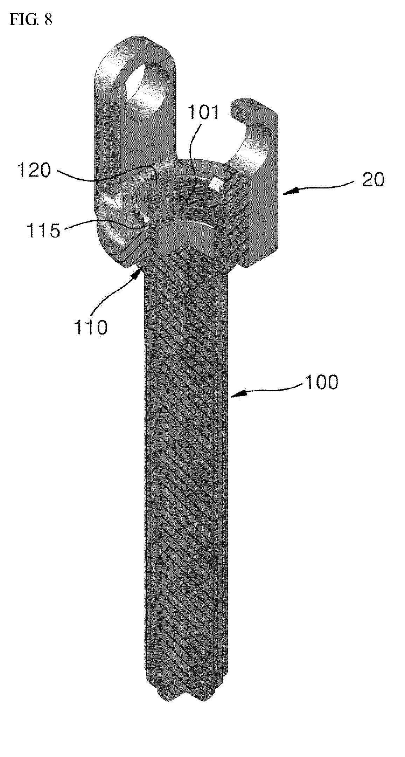

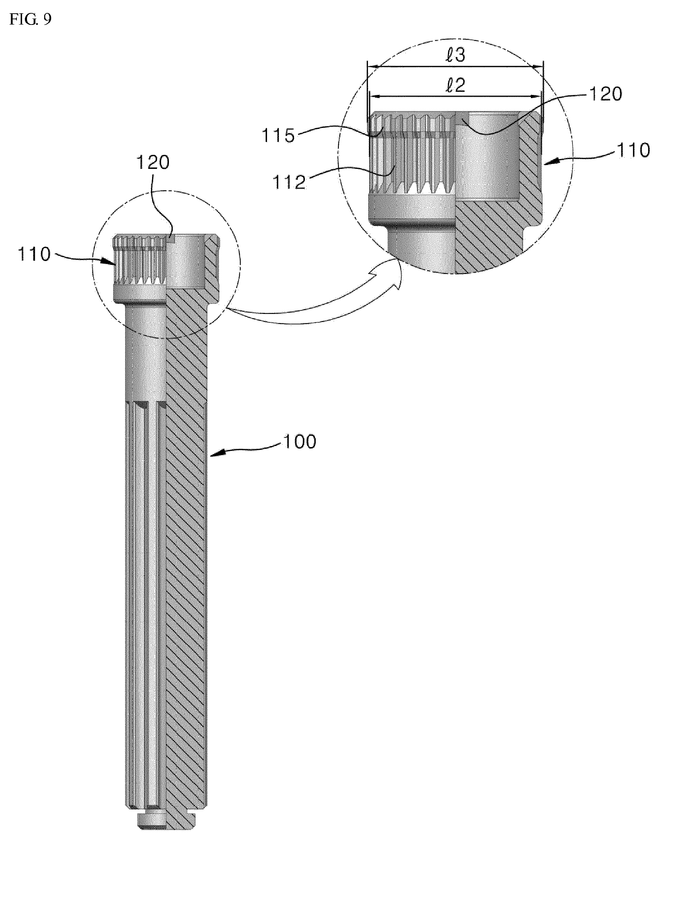

Thereafter, the yoke 22 and the interm shaft 100 on which the respective serrations 22 and 112 are formed are coupled with the serrations, and then as shown in FIGS. 8 and 9, the inner side of the upper end of the fitting portion 110 of the interm shaft 100 is pressed to thus extend the upper end of the fitting portion 110 of the interm shaft 100 more outwardly from the inner diameter of the yoke 20.

Through crimping of the interm shaft 100, a plurality of portions are extended on the rim of the small diameter portion 115 that is the upper end of the fitting portion 110 and the inner side portion of the small diameter portion 115, to thereby extend the small diameter portion 115 that is the upper end of the fitting portion 110 of the interm shaft 100 more outwardly from the inner diameter of the yoke 20, and to thus prevent the vertical direction secession of the interm vertical shaft 100 and the yoke 20.

In this case, the crimping of the interm shaft 100 is performed in a manner that the interm shaft 100 is pressed with a press in four directions from the inner side of the small diameter portion 115 of the fitting portion 110 of the interm shaft 100. Accordingly, as shown in FIGS. 8 and 9, the small diameter portion 115 is extended outwardly and thus the inner diameter ℓ3 of the small diameter portion 115 becomes larger than the inner diameter ℓ2 of the fitting portion 110 on which the serrations 112 are formed. In addition, a crimping portion 120 of the interm shaft 100 is extended outwardly to thereby be pressed with the circumferential portion of the end of the yoke 20 and to thus make the interm shaft 100 fixedly coupled to the yoke 20.

That is, according to the present invention, the crimping portion 120 of the interm shaft 100 that is extended by the crimping operation is interfered with and assembled with the inner diameter of the yoke 20.

Therefore, when the interm shaft 100 and the yoke 20 are completely coupled by serration coupling and caulking, the interm shaft 100 and the yoke 20 are interfered in the left and right direction by an end coupling method of the yoke 20 and the interm shaft 100 that are serration-coupled with each other, to thereby prevent the vertical direction secession of the interm shaft 100 and the yoke 20, through the crimping operation.

As described above, the present invention has been described with respect to particularly preferred embodiments. However, the present invention is not limited to the above embodiments, and it is possible for one who has an ordinary skill in the art to make various modifications and variations, without departing off the spirit of the present invention. Thus, the protective scope of the present invention is not defined within the detailed description thereof but is defined by the claims to be described later and the technical spirit of the present invention.

## Claims

1. A method of assembling an interm shaft for a steering shaft, the assembly method comprising:
a serration molding step (S10) of molding serrations on an inner diameter portion of a yoke (20) of a universal joint;
a fitting portion forming step (S20) of forming a groove portion (101) so as to have an interior space in one end of the interm shaft (100) that is fitted to the yoke (20), in which a fitting portion (110) on which serrations are molded is formed on an outer diameter portion of the groove portion (101);
a serration coupling step (S30) of performing a serration coupling by inserting the fitting portion (110) of the interm shaft (100) into the inside of the yoke (20) so as to be fitted with each other; and
a fitting portion pressing step (S40) of crimping an inner side of an upper end of the fitting portion (110) of the interm shaft (100) coupled with the yoke (20), and extending the upper end of the fitting portion (110) to an outer side from the inner diameter of the yoke (20), to thereby prevent mutual secession between the yoke (20) and the interm shaft (100),
wherein at a process of forming serrations on the fitting portion (110) of the interm shaft (100), a stepped small diameter (115) is formed so that an outer diameter portion of the fitting portion (110) becomes smaller than the outer diameter of the other portion of the fitting portion (110).

2. The assembly method of claim 1, wherein at the serration coupling step (S30), the small diameter (115) is penetratively protruded from the inner diameter portion of the yoke (20).

3. The assembly method of claim 1, wherein at the fitting portion pressing step (S40), the fitting portion (110) of the interm shaft (100) is made to penetrate the inner diameter portion of the yoke (20), and then compressive forces are transferred in all directions at the inner side of the upper end of the penetrated interm shaft (100), to thereby form the outer diameter of the upper end of the fitting portion (110) of the interm shaft (100) further outwardly from the inner diameter of the yoke (20).
